# EUROPEAN PATENT APPLICATION

(11) **EP 4 840 277 A1**
(43) Date of publication of application: **18.11.2026**
(21) Application number: 25315160.9
(22) Date of filing: 12.05.2025
(51) Int. Cl.: A01B 69/04, A01B 79/00, A01D 41/127

(54) **AGRICULTURAL VEHICLE**

(71) Applicant: CNH Industrial France S.A.S., 91150 Morigny-Champigny (FR); CNH Industrial Belgium N.V., 8210 Zedelgem (BE); CNH Industrial Italia S.p.A., 10156 Torino (IT)
(72) Inventor: De Bolle, Lieven, 8210 Zedelgem (BE); Couton, Mathieu, 91150 Morigny-Champigny (FR); Lorizzo, Valerio Marcello, 10156 Turin (IT); Cayrouse, Pierre, 91150 Morigny-Champigny (FR)
(74) Representative: CNH Industrial IP Department

(57) **Abstract**

An agricultural vehicle (300) comprising a plurality of tool connection points (314-321), wherein each tool connection point (314-321) is for receiving an agricultural tool. The vehicle also includes a controller (323) that is configured to: look up an offset distance for each agricultural tool based on an associated tool type, wherein the offset distance represents an offset from the agricultural vehicle (300) being at a known location with respect to a row of crop, along a longitudinal dimension of the row of crop, at which the tool should be activated; determine an activation time for each agricultural tool based on: i) a location of the tool connection point (314-321) on the agricultural vehicle (300) to which the tool is connected; and ii) the offset distance for the tool type; receive a trigger signal, which is representative of the agricultural vehicle being at the known location; and for each agricultural tool, send a tool activation signal to the agricultural tool upon expiry of the associated activation time after the trigger signal is received.

## Description

### FIELD OF THE INVENTION

The present disclosure relates to agricultural machines, such as straddle tractors and harvesting vehicles that have a plurality of tool connection points.

### SUMMARY OF THE INVENTION

According to a first aspect, an agricultural vehicle comprising:
a plurality of tool connection points, wherein each tool connection point is for receiving an agricultural tool; and
a controller configured to look up an offset distance for each agricultural tool that is connected to a tool connection point based on an associated tool type, wherein the offset distance represents an offset from the agricultural vehicle being at a known location with respect to a row of crop, along a longitudinal dimension of the row of crop, at which the tool should be activated; the plurality of tool connection points comprises three or more tool connection points; and
at least three agricultural tools are connected to the three or more tool connection points.
   determine an activation time for each agricultural tool based on: i) a location of the tool connection point on the agricultural vehicle to which the tool is connected; and ii) the offset distance for the detected tool type;
   receive a trigger signal, which is representative of the agricultural vehicle being at the known location with respect to the row of crop; and
   for each agricultural tool, send a tool activation signal to the agricultural tool upon expiry of the associated activation time after the trigger signal is received.

The controller may be configured to: automatically detect a tool type for each agricultural tool that is connected to each of the plurality of tool connection points; and look up the offset distance for each agricultural tool based on the associated detected tool type.

The controller may be configured to receive a tool-type-identifier from each tool that is connected to one of the plurality of tool connection points in order to automatically detect the tool type.

The plurality of tool connection points may comprise three or more tool connection points. At least three agricultural tools may be connected to the three or more tool connection points.

The tool activation signal may be for: putting the agricultural tool into an operational position; or for taking the agricultural tool out of an operational position.

The controller may be configured to: determine the activation time for each tool also based on: iii) an activation period that represents the length of time that it takes for the tool type to transition to or from an operational position.

The tool activation signal may be configured to: change the orientation of the associated agricultural tool; change the location of the associated agricultural tool; and / or change a working speed of the associated agricultural tool.

The controller may be configured to determine the activation time for each agricultural tool also based on a measured speed of the agricultural vehicle.

The controller may be configured to determine the activation time for each agricultural tool based on a distance between: a) the location of the tool connection point on the agricultural vehicle to which the agricultural tool is connected; and b) a predetermined reference point on the agricultural vehicle.

The agricultural vehicle may further comprise a sensor that is configured to provide a sensed signal to the controller, wherein the sensed signal is indicative of the agricultural vehicle being at the known location with respect to the row of crop; and wherein the controller is configured to automatically generate the trigger signal based on the sensed signal.

The trigger signal may be either:
representative of the agricultural vehicle being at a known location with respect to the start of a row of crop; or
representative of the agricultural vehicle being at a known location with respect to the end of a row of crop.

The controller may be further configured to: in response to receiving the trigger signal, automatically set an operating parameter of the agricultural vehicle according to a predetermined routine.

The controller may be configured to:
receive a sequence of trigger signals, which are each representative of the agricultural vehicle being at different known locations with respect to the row of crop; and
for each of the sequence of trigger signals:
   look up an offset distance for each agricultural tool based on the associated tool type, wherein the offset distance represents an offset from the agricultural vehicle being at the associated known location with respect to the row of crop at which the tool should be activated;
   determine an activation time for each agricultural tool based on: i) a location of the tool connection point on the agricultural vehicle to which the tool is connected; and ii) the offset distance for the tool type; and
   for each agricultural tool, send a tool activation signal to the agricultural tool upon expiry of the associated activation time after the associated trigger signal is received.

The agricultural tools may be operable independently of each other.

The agricultural vehicle may be a straddle tractor, such as a harvesting vehicle, such as a grape harvester.

According to a further aspect of the present disclosure, there is provided a computer-implemented method of operating an agricultural vehicle, wherein the agricultural vehicle comprises a plurality of tool connection points, wherein each tool connection point is for receiving an agricultural tool, the method comprising:
looking up an offset distance for each agricultural tool that is connected to a tool connection point based on an associated tool type, wherein the offset distance represents an offset from the agricultural vehicle being at a known location with respect to a row of crop, along a longitudinal dimension of the row of crop, at which the tool should be activated;
determining an activation time for each agricultural tool based on: i) a location of the tool connection point on the agricultural vehicle to which the tool is connected; and ii) the offset distance for the tool type;
receiving a trigger signal, which is representative of the agricultural vehicle being at the known location with respect to the row of crop; and
for each agricultural tool, sending a tool activation signal to the agricultural tool upon expiry of the associated activation time after the trigger signal is received.

There may be provided a computer program, which when run on a computer, causes the computer to configure any apparatus, including a controller or vehicle disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download. There may be provided one or more non-transitory computer-readable storage media storing computer-executable instructions that, when executed by a computing system, causes the computing system to perform any method disclosed herein.

### BRIEF DESCRIPTION OF THE DRAWINGS

Figure 1 shows a fruit harvesting machine in an agricultural field;
Figure 2 shows a plan view of a straddle tractor, which is another example of an agricultural vehicle according to the present disclosure;
Figure 3 schematically shows an agricultural vehicle that will be used to describe an embodiment of the present disclosure;
Figure 4 shows a state diagram that illustrates an example of how the controller of the straddle tractor of Figure 3 can transition between different trigger states;
Figure 5 illustrates schematically a straddle tractor as it is working an agricultural field that includes rows of crop; and
Figure 6 shows a computer-implemented method of operating an agricultural vehicle according to an embodiment of the present disclosure

### DETAILED DESCRIPTION

Agricultural vehicles can have a plurality of agricultural tools connected to them, such that the tools can be activated independently of each other as part of an agricultural operation. Such vehicles can have a plurality of tool connection points, such that each tool connection point can receive an agricultural tool. The agricultural tools can be replaceable such that any suitable tool can be connected to each of the tool connection points, and thereby the agricultural vehicle can be reconfigurable by connecting a specific combination of tools to perform a specific agricultural operation. As will be discussed below, this reconfigurability of the vehicle, along with the fact that not all tools need activating at the same instant in time during an agricultural operation can make it very difficult for an operator of the vehicle to perform the agricultural operation in an optimal way. If the tools are not activated at the correct time, in the correct way, during an agricultural operation then the quality of the agricultural operation will suffer and so will any crop that is processed as part of the agricultural operation.

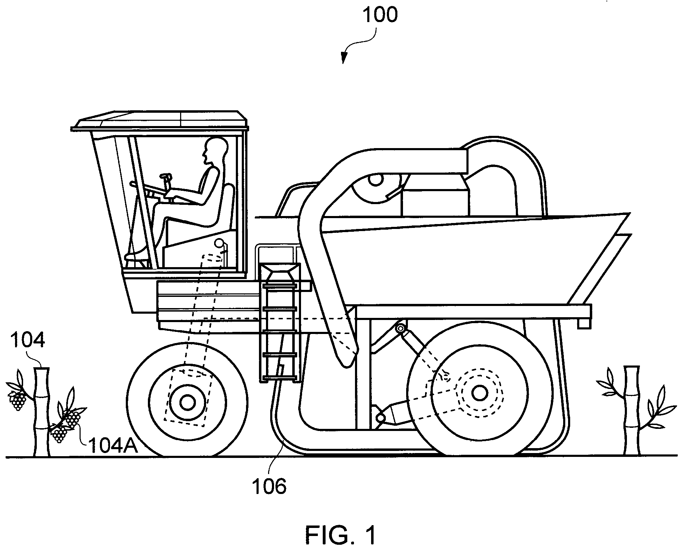

Figure 1 shows a fruit harvesting machine 100 in an agricultural field 102. The fruit harvesting machine 100 of Figure 1 is an example of an agricultural vehicle of the present disclosure. Furthermore, the fruit harvesting machine 100 of Figure 1 is an example of a straddle tractor.

The fruit harvesting machine 100 of Figure 1 is for harvesting grapes 104A from vines 104. As the machine 100 drives forward, the vines 104 pass through a harvesting system 106 mounted to the underside of the fruit harvesting machine 100. The harvesting system 106 can then harvest material from the vines 104.

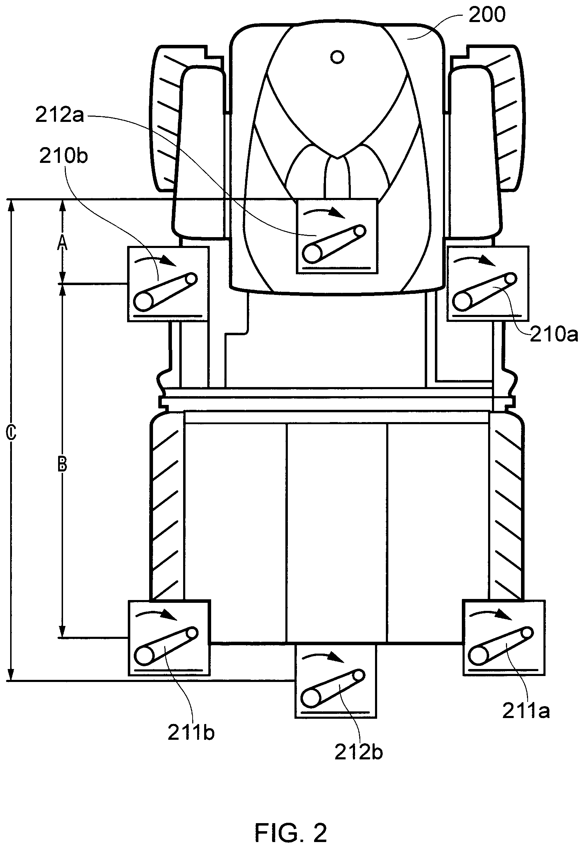

Figure 2 shows a plan view of a straddle tractor 200, which is another example of an agricultural vehicle according to the present disclosure.

In this example, two or more independent agricultural tools (which can also be referred to as implements) can be mounted to the straddle tractor 200. Therefore, in some examples there may be three, four, or more independent agricultural tools mounted to the straddle tractor 200. As will be discussed below, the agricultural tools can be located at left / right / central positions. Six example tool connection points 210-212, to which a tool can be mounted, are identified in Figure 2. These tool connection points can also be referred to as tool carriers in some examples. By way of non-limiting examples:
- One or more tool connection points 210a, 210b can be located on the front-side of the straddle tractor 200, and they can be suitable for receiving a stripper, a trimmer, a pruner, etc., for example.
- One or more tool connection points 211a, 211b can be located on the top of the straddle tractor 200 in order to work the left and / or right side of the straddle tractor 200, and they can be suitable for receiving a sprayer, for example.
- One or more tool connection points 212a, 212b can be located under the straddle tractor 200, and they can be suitable for receiving a mower, a plough, etc., for example.

It will be appreciated that the tool connection point locations and associated tools that are identified above are merely exemplary, and that any suitable tool can be connected to a tool connection point at any suitable location on an agricultural vehicle.

Each (e.g. front) tool can be replaced by another tool without conflicting with any of the other already mounted tools (e.g. on the side). This can be facilitated by each tool connection point (front, side, underneath) having its own dedicated electrical input / output connections (IOs). Also, each tool connection point can have its own handling system that can be used to provide an operator with multiple pages of information and buttons for operating the tool in order to operate the multiple different tools that can be connected to the tool connection point. In this way, the operator can interact with multiple user interfaces that are dedicated to the specific tools that are mounted to the different tool connection points on the straddle tractor 200. However, it is difficult for the operator to correctly control multiple mounted tools together during an agricultural operation in the field. In particular, it can be difficult for the operator to correctly start and stop the multiple tools when entering or exiting a row of crop such as a grape row.

It has been found that it can be very difficult for an operator to navigate multiple user interfaces in order to individually control multiple tools correctly during an agricultural operation. Even if some buttons were centralised on a main user interface, it is still difficult for an operator to activate multiple tools at the correct times because they can be positioned at different locations on the straddle tractor 200 and may need to start at different positions along a row of crop. For instance, when the straddle tractor 200 is travelling forwards, the front implement will hit the border of the field / grape row first, then the implements under the straddle tractor 200 where a central mower can be mounted, which is in front of the ones that mow the left and right side (in between the wheels). Furthermore, the location of the tool on the straddle tractor 200 can depend on the implement type, and how it is connected to the tool connection point. For example, a tool may be connected to a tool connection point in one of a plurality different ways, and potentially at different locations of the tool connection point. In this way, the positions of the tools on the straddle tractor 200 can are considered variable. Furthermore, in an example where there is a pair of tool connection points (such as a left one and a right one), a tool that is connected to the left tool connection point (such as a left strimmer or stripper) can be connected at a different distance along the longitudinal dimension of the straddle tractor 200 than a corresponding tool that is connected to the right tool connection point. That is, they can have different longitudinal offsets. In a particular example, if there is a side (top) tool, then it's location on the straddle tractor can also depend on the implement type.

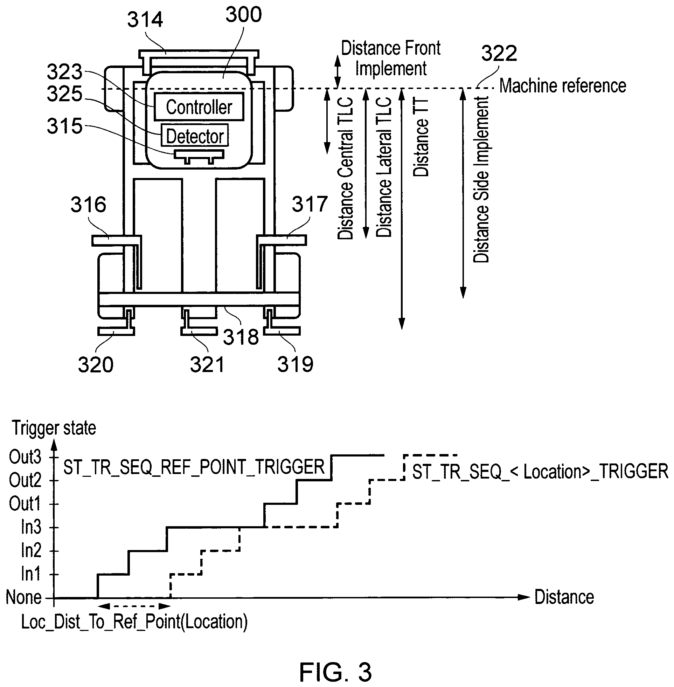

Figure 3 schematically shows an agricultural vehicle, which in this example is a straddle tractor 300, that will be used to describe an embodiment of the present disclosure. The straddle tractor 300 has a longitudinal dimension (which is vertical in Figure 3), that aligns with a row of crop that the straddle tractor 300 is to process. Such a row of crop may be a row of grape vines that the straddle tractor drives over the top of, for example.

The straddle tractor 300 has a plurality of tool connection points 314-321, wherein each tool connection point is for receiving an agricultural tool in the same way as described above with reference to Figure 2. As shown in Figure 3, the tool connection points are at different locations on the agricultural vehicle. In particular, various of the tool connection points are at different locations along the longitudinal dimension of the agricultural vehicle. In this example, a longitudinal offset from a reference position 322 on the straddle tractor 300 is labelled for each tool connection point 314-321. In the example of Figure 3, the reference position on the straddle tractor 300 is aligned with the axle for the front wheels.

The straddle tractor 300 of Figure 3 also includes the functionality of a controller 323. This functionality may be implemented by a processor that is located on the straddle tractor 300, by a processor that is remote from the straddle tractor 300, or by a combination of the two.

In this example, the controller can automatically detect a tool type for each agricultural tool that is connected to one of the tool connection points 314-321. Such automatic tool detection can be performed in any of a number of different ways. For example, a resistor plug (that can also be known as a shunt) that is associated with a specific tool type can be inserted into a socket at the same time that the tool is connected to a tool connection point 314-321. Similar functionality can be achieved digitally with a number of input lines, such as 4 input lines.

As shown in Figure 3, the straddle tractor 300 can include a detector 325, which is connected to the controller 322 and is operable for automatically identifying a tool that is connected to a tool connection point 314-321 and for outputting a signal or information representative thereof to the controller 322. This can enable the controller 322 to select and retrieve the appropriate information for that tool type. As one example, the detector 325 can include a plug or receptacle on the straddle tractor 300 that is connectable to a device (not shown), which can be, for instance, a mating plug or receptacle on a tool when the tool is connected to the straddle tractor 300, and operable for automatically identifying the tool. For instance, the detector 325 can include a connector containing a series of switches, the states of which are changed in different predetermined manners by connection of different mating connectors thereto, wherein each different type of tool has a different mating connector which changes the state of the switches in the predetermined manner for that tool.

In this way, the controller can receive a tool-type-identifier from each tool that is connected to one of the plurality of tool connection points in order to automatically detect the tool type. In other examples, an operator can manually provide the tool type information for the connected agricultural tools.

The controller can then look up an offset distance for each agricultural tool based on the associated tool type. For example, this offset distance may be stored in a database or look-up table in computer memory that is accessible by the controller. The offset distance represents an offset from the agricultural vehicle being at a known location with respect to a row of crop, along a longitudinal dimension of the row of crop, at which the tool should be activated. For example: some tools may need to be activated a certain distance before the straddle tractor 300 enters the row of crop, some tools may need to be activated as the straddle tractor 300 enters the row of crop, and some tools may need to be activated a certain distance after the straddle tractor 300 enters the row of crop. This is represented by the offset distance. Similar principles can apply to when a tool should be activated as the straddle tractor 300 exits a row of crop. Examples of activating a tool can include putting the agricultural tool into an operational position and taking the agricultural tool out of an operational position.

The controller can then determine an activation time for each agricultural tool based on:
i) a location of the tool connection point on the agricultural vehicle to which the tool is connected; and
ii) the offset distance for the tool type.

In relation to i), the location of the tool connection point on the agricultural vehicle to which the tool is connected is in the longitudinal dimension of the tractor (i.e., parallel with the direction of travel of the straddle tractor 300). In this example, it is implemented as the distance to the front axle reference 322, as identified by the double-ended arrows in Figure 3.

In relation to ii), as discussed above, this is calculated for each specific tool that is connected to the straddle tractor 300 and it represents the position along the row of crop that the tool should be activated.

When the straddle tractor 300 is entering or exiting a row of crop, for example, the controller receives a trigger signal. Generally speaking, the trigger signal is representative of the agricultural vehicle being at a known location with respect to the row of crop, such as with respect to the start or the end of a row of crop. In some examples, as will be discussed below, the controller can receive a sequence of trigger signals that represent the agricultural vehicle being at a plurality of known locations with respect to the row of crop. A trigger signal can be received by the controller in response to an operator of the straddle tractor 300 manually pressing a button when the straddle tractor 300 is in a specific location or it can be automatically generated, as will be described below.

The controller can then, for each agricultural tool, send a tool activation signal to the agricultural tool upon expiry of the associated activation time after the trigger signal is received. In this way, each of the agricultural tools can be automatically activated at the correct position along the row of crop irrespective of where on the straddle tractor 300 the tool is mounted. Also, the activation time is determined for each tool such that the tool is activated at the correct location for that specific tool.

The action that the agricultural tool will perform in response to receiving the tool activation signal will vary from tool to tool. For example, the tool may perform one or more of the following actions in response to receiving a tool activation signal: change the orientation of the associated agricultural tool; change the location of the associated agricultural tool; and / or change a working speed of the associated agricultural tool.

Furthermore, in some examples the controller can determine the activation time for each tool also based on: iii) an activation period that represents the length of time that it takes for the tool type to transition to or from the operational position. In this way, the activation period can be included in the activation time so that the tool is in the correct operational position at the desired location along the row of crop.

That is, one or more of the tools can have an activation period. E.g., the time it takes to move a mower to the ground. The controller can also use this activation period such that the particular triggers for the tool at a specific location should appear earlier to give the system the time to react and to be fully operational at the correct position. Use of a predetermined activation period will provide greater accuracy if the speed of the vehicle stays constant. Alternatively, as discussed below, the activation period can be set based on a measured or expected value of the speed of the vehicle. In any case, use of an activation period can avoid a need for the operator to calculate a level of compensation that is required up-front and manually apply it based on the implement location offset.

Operating the agricultural vehicle in the manner described above can result in improved performance than can be achieved by a "regular" sequencing alternative. In turn, this results in an improved and more efficient agricultural operation.

Furthermore, in examples where the controller automatically detects the types of tools that are connected to the straddle tractor 300, the straddle tractor can continue to be operated seamlessly even if one implement is replaced by another. This is because the controller can automatically determine an activation time for the new tool without the operator needing to change how they operate the straddle tractor 300. In this way, the complexity of defining and changing sequences is taken away from the operator and a stable solution can be implemented before the operator starts using the straddle tractor 300. This stable solution will be independent of the combination of implements used on the straddle tractor 300.

The lower part of Figure 3 shows a plot in which distance along a row of crop is shown on the horizontal axis. The vertical axis represents trigger state, with the following values labelled:
- In1 - this represents a trigger signal when the straddle tractor 300 is at a first location with respect to entering a row of crop (such as a predefined distance before the straddle tractor 300 enters the row of crop).
   In this example, In1 represents a "prepare for working" trigger at which the following operations are performed:
   ∘ Trimmer is set to working speed.
   ∘ Front frame is moved down (to a working height if there are appropriate sensors).
- In2 - this represents a trigger signal when the straddle tractor 300 is at a second location with respect to entering a row of crop (such as a location at which the straddle tractor 300 enters the row of crop).
   In this example, In2 represents a "start working" trigger at which the following operations are performed:
   ∘ Customsteer is switched off (slow turning).
   ∘ Toolcarrier is moved down.
   ∘ TRacktine is moved down.
- In3 - this represents a trigger signal when the straddle tractor 300 is at a third location with respect to entering a row of crop (such as a predefined distance after the straddle tractor 300 has entered the row of crop).
   In this example, In3 represents a "full working speed" trigger at which the following operations are performed:
   ∘ Set cruise control speed to working speed.
   ∘ Cruise control (which can also be referred to as Smartsteer) is switched on.
- Out1 - this represents a trigger signal when the straddle tractor 300 is at a first location with respect to exiting a row of crop (such as a predefined distance before the straddle tractor 300 exits the row of crop).
   In this example, Out1 represents an "almost at the end of the field / row" trigger at which the following operations are performed:
   ∘ Set cc speed to headland speed.
   ∘ Cruise control (which can also be referred to as Smartsteer) is switched off.
- Out2 - this represents a trigger signal when the straddle tractor 300 is at a second location with respect to exiting a row of crop (such as a location at which the straddle tractor 300 exits the row of crop).
   In this example, Out2 represents an "end of row" trigger at which the following operations are performed:
   ∘ Customsteer is switched on (fastturning).
   ∘ Front frame is moved up (to a headland height if there are appropriate sensors).
   ∘ Toolcarrier is moved up.
   ∘ TRacktine is moved up.
- Out3 - this represents a trigger signal when the straddle tractor 300 is at a third location with respect to exiting a row of crop (such as a predefined distance after the straddle tractor 300 has exited the row of crop).
   In this example, Out3 represents a "stop working" trigger at which the following operations are performed:
   ∘ Trimmer speed is switched off.

The solid line that is plotted in Figure 3 represents the distance along the row of crop (including before and after the row of crop) that the trigger signal is received for the reference position at the front axle 322 of the straddle tractor 300. The dashed plot in Figure 3 represents the application of an offset for activating a tool at a tool connection point that is offset from the front axle 322 of the straddle tractor 300. In this way, the controller can determine the activation time for each agricultural tool based on a distance between: a) the location of the tool connection point 314-321 on the straddle tractor 300 to which the agricultural tool is connected; and b) a predetermined reference point 322 on the straddle tractor 300.

Furthermore, as shown in the plot of Figure 3, the controller receives the sequence of trigger signals, which are each representative of the agricultural vehicle being at different known locations with respect to the row of crop. A sequence of six trigger signals is shown in the plot of Figure 3, although it will be appreciated that any other number of trigger signals can be provided in a sequence in embodiments of the present disclosure. For each of the sequence of trigger signals, in the same way as described above, the controller can, for each agricultural tool: look up an offset distance; determine an activation time; and send a tool activation signal. Looking up the offset distance can include associating an activation time for a tool with one or more specific trigger signals. For instance, the controller can apply the offset distance by selecting which of a plurality of trigger signals should be used for activating a tool such that the tool is activated at the correct distance along the longitudinal dimension of the row of crop. It will be appreciated that the same tool may be activated in response to different trigger signals (for example, when entering or exiting a row of crop), and potentially activated in different ways.

As will be appreciated from the detailed example of the In1, In2, In3, Out1, Out2, Out3 trigger signals that are discussed above, in addition to activating a tool, the controller can also automatically set an operating parameter of the agricultural vehicle in response to receiving the trigger signal. This can include setting the speed or a steering parameter of the straddle tractor 300. In some implementations, this can be according to a predetermined routine.

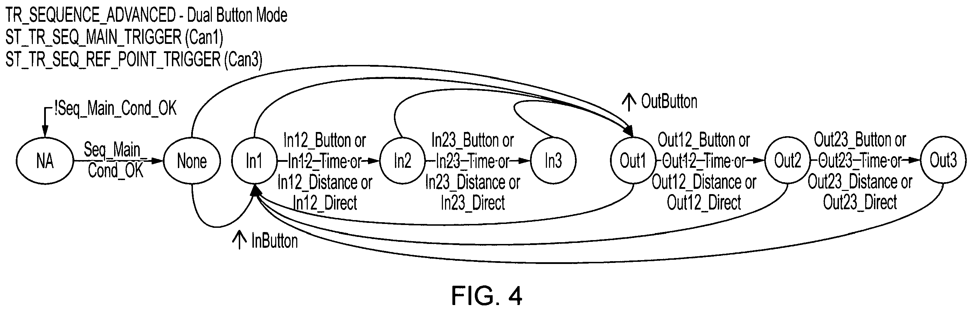

Figure 4 shows a state diagram that illustrates an example of how the controller of the straddle tractor of Figure 3 can transition between different trigger states.

In this example, the In1 trigger signal is received by the controller in response to an operator manually pressing a button. This is represented in Figure 4 as "InButton". The operator can manually press the button when the straddle tractor is in advance of entering the row of crop. As will now be discussed, this can result in a some or all of tool activation steps being automatically performed (either directly as a result of the IN1 trigger signal, or indirectly in response to subsequently receiving additional trigger signals).

As shown in Figure 4, the operation of the controller can transition between different states in one of a number of ways. We provide the following exemplary details for the transition from In1 to In2:
- In12_Button, which is indicative of the operator manually pressing a button to initiate the change;
- In12_Time, which is indicative of a predetermined time having elapsed since the In1 trigger signal was received. In some examples, this can be a fixed predetermined period of time. In other examples, this can be based on an assumption that the straddle tractor has been travelling at a known speed. In other examples, the In12_Time can be calculated based on measurements of the speed of the straddle tractor to ensure that the subsequent tool activations are performed when the straddle tractor is in the correct location along the length of the row of crop;
- In12_Distance, which is indicative of the straddle tractor having travelled a predetermined distance since the In1 trigger signal was received. In some examples, the distance travelled can be available to the controller as information provided by an odometer over a CAN bus. In another example, it can be calculated if the speed of straddle tractor is known; or
- In12_Direct, which is indicative of a direct transition to In2 without any delay. This may be initiated by the operator manually pressing a single button that causes the controller to receive the In1 and In2 trigger signals at the same time, perhaps because they didn't press the manual button in advance of entering the row of crop and then they need to advance the operation to that associated with the In2 trigger signal without delay.

It can be seen from Figure 4 that there are corresponding transitions from the In2 trigger signal.

It will be appreciated that different types of transitions can be better suited for transitioning between different states. For example, for the transition from In2 to In3, a transition based on time (i.e., In23_Time) can be well-suited because the transition does not need to occur at a precise location after the tractor has entered a row of crop. Therefore, changing state from In2 to In3 after a fixed period of time can be acceptable. As another example, it may be beneficial for the transition from In1 to In2 to occur at a precise location (such as the start of a row of crop), such that a transition based on distance (i.e., In12_Distance) is well-suited.

Figure 4 also shows that the operation of the straddle tractor can transition from any of the In trigger signal states to the Out1 trigger signal in response to an operator manually pressing a button. This is represented in Figure 4 as "OutButton". The controller can then transition through the Out trigger signal states in the same way as the In trigger states.

In this implementation, the generation and receipt of trigger signals are defined as two mini sequences that represent ending the processing of one row of crop, turning if required, and then starting to process a new row. By way of non-limiting example, this can include the following for processing a row of grape vines:
1. Ending the work tasks, driving out the current grape row:
   - Out1: Before end of row. (Typical tasks: slow down, disable automatic systems, ....)
   - Out2: End of row. (Stop spraying, mower to up position, ....)
   - Out 3: End of work. (Switch off all systems, ....) This step isn't always required
2. Start the work task, driving in the new grape row:
   - In1: Before entering a new row. (Pre-activate tools that need some more time to start,....)
   - In2: Start of row. (Move mower down, opening sprayer nozzle.)
   - In3: Full speed. The operator is now some meters in field. We can go in full speed harvest mode.

It will be appreciated that this disclosure should not be limited to the sequence steps that are defined above. The important point is that those steps are standardised. They can be defined up-front by a central sequence system and be made available by the development of an implement program for each independent implement so that they are able to connect functions to the appropriate steps of the task / triggers. This means it's possible to extend the system with as many as tasks (start row, end row, ...) and steps (in1, in2, ...) as desired. Typically, the number of tasks that are implemented will be set as part of configuring the system.

As discussed above, the operator can press a button to start the sequence. In one implementation this can be to start working (In1) and / or to get prepared for a turn (Out1). The following steps (In2 and In3 or Out 2 and Out3) can be selected again by a button push or they can be automatically activated in response to an elapsed time or distance.

In a further example, the straddle tractor can include a sensor that provides a sensed signal to the controller. The sensed signal can be indicative of the agricultural vehicle being at the known location with respect to the row of crop. For example, the sensor can include one or more of: a camera, a location determination sensor (such as GPS), a radar sensor, a lidar sensor, etc. The controller can then automatically generate the trigger signal based on the sensed signal. This can remove or reduce the need for an operator of the straddle tractor to manually activate the tools, such that the accuracy and efficiency of the agricultural operation can be further improved because it is less likely that a tool will not be activated at the correct position with respect to the row of crop.

In this way, sensors can be used to prove the possibility of moving directly to specific steps. (e.g. detection of the border of a field can move the processing directly to steps In2 or Out2). In such examples, the controller can ensure that steps that are associated with any skipped trigger signals (due to advanced sensor activations) are automatically also executed. This can ensure that this sequence system is future proof for autonomous operation.

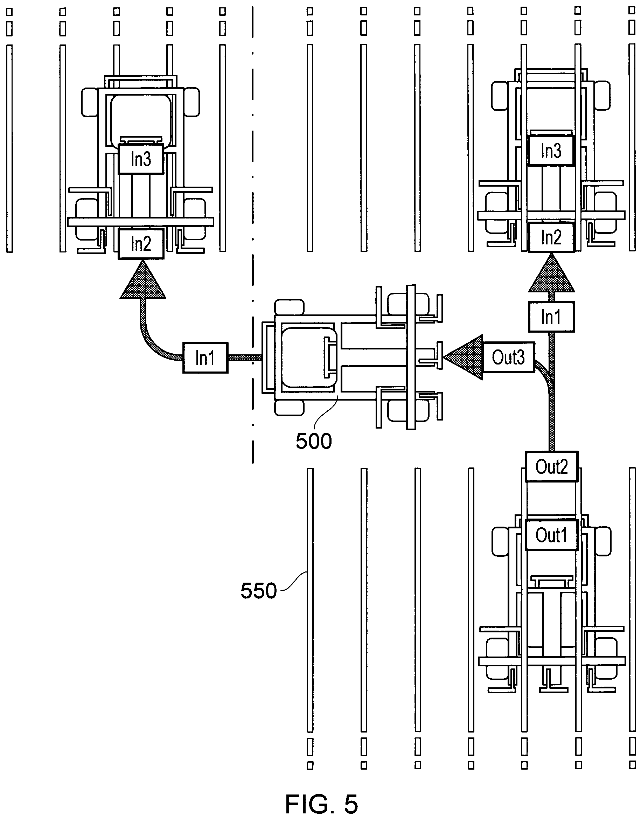

Figure 5 illustrates schematically a straddle tractor 500 as it is working an agricultural field that includes rows 550 of crop. Figure 5 shows example locations of the straddle tractor at which the controller receives the trigger signals (In1, In2, In3, Out1, Out2, Out3) that are shown in Figure 4.

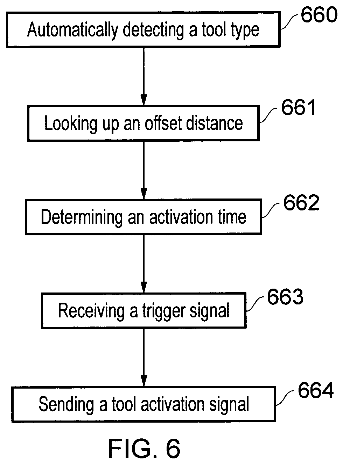

Figure 6 shows a computer-implemented method of operating an agricultural vehicle according to an embodiment of the present disclosure. The method can be performed by one or more controller that are associated with the vehicle, the functionality of which may or may not be located locally on the vehicle.

As discussed in detail above, the agricultural vehicle comprises a plurality of tool connection points, wherein each tool connection point is for receiving an agricultural tool.

At step 660, the method includes the optional step of automatically detecting a tool type for each agricultural tool that is connected to each of the plurality of tool connection points. In this way, the operator does not have to look up any configuration or operation details for the multiple tools that are connected to the agricultural vehicle which can be an onerous task and can lead to mistakes in how an associated agricultural operation is performed. In other examples, the operator can manually provide information about the tool type of each tool that is connected to the agricultural vehicle.

At step 661, the method involves looking up an offset distance for each agricultural tool based on the associated tool type. As discussed above, the offset distance represents an offset from the agricultural vehicle being at a known location with respect to a row of crop, along a longitudinal dimension of the row of crop, at which the tool should be activated.

At step 662, the method includes determining an activation time for each agricultural tool based on: i) a location of the tool connection point on the agricultural vehicle to which the tool is connected; and ii) the offset distance for the tool type. In some examples, the method can also include determining the activation time for each agricultural tool also on a measured speed of the agricultural vehicle. As is known in the art, such a measured speed can be available on the CAN bus of the vehicle. Alternatively, a speed sensor can be used to provide that information directly to the method. It will be appreciated that if the vehicle is travelling relatively slowly, then the activation time should be increased such that the tool activation signal is subsequently sent to the agricultural tools such that they are activated when they are in the correct location with respect to the longitudinal dimension of the row of crop.

At step 663, the method involves receiving a trigger signal, which is representative of the agricultural vehicle being at the known location with respect to the row of crop.

Then at step 664, for each agricultural tool, the method includes sending a tool activation signal to the agricultural tool upon expiry of the associated activation time after the trigger signal is received.

This method recognises that not all tools or sub-systems or located at the same position of the agricultural vehicle, and that the activation of them should be differentiated in distance. This can be quantified by an offset distance between the tool and the front wheel, for example. Such an offset can be in front of or behind the front wheel position. In some implementations, the front wheel position can be used as a standard refence point except when tools are in front of it, in which case the front position can be used as a reference trigger point. All requested step transitions that re required ca then be defined with reference to this reference point.

Examples disclosed herein can create a dedicated set of triggers / steps for each tool location. This can result in the required steps / triggers being postponed for some tool locations such that the associated tool is at the same position as the reference point when the step was requested.

In one implementation, each tool connection point / implement can define 2 or 3 (for example) different locations where they can have their tools located. As the definition of the offset can be defined in each implement program, the location position can also change together with a change of the implement.

One or more of the examples disclosed herein can enable actions associated with tools on an agricultural vehicle to be automatically connected with a predefined trigger at a predefined location, such that appropriate actions associated with the specific tools that are connected to the agricultural vehicle can be automatically added into a sequence of events. This can mean that the associated data can automatically be included as part if implement program and can be updated when different tools are used. In this way, examples of the present disclosure can be considered as modular systems where the operator can simply run a single same sequence of steps (such as pressing an "in" button and an "out" button) and the tools / implements on the vehicle will automatically take the correct actions at the correct place and time.

Examples of the present disclosure enable the operator of an agricultural vehicle to control multiple independent implements in a field with only one or two buttons.

Examples disclosed herein can also provide a reduction of service time / costs required to set up sequences for every different combination of tools / implements that could be mounted together on the vehicle. This can especially be the case for a straddle tractor, which is an example of a multi-tool modular machine, whereby a modular sequence system can adapt the sequence automatically depending on the installed tools / implements.

## Claims

1. An agricultural vehicle (300) comprising:
a plurality of tool connection points (314-321), wherein each tool connection point (314-321) is for receiving an agricultural tool; and
a controller (323) configured to:
look up an offset distance for each agricultural tool that is connected to a tool connection point (314-321) based on an associated tool type, wherein the offset distance represents an offset from the agricultural vehicle (300) being at a known location with respect to a row of crop, along a longitudinal dimension of the row of crop, at which the tool should be activated;
determine an activation time for each agricultural tool based on: i) a location of the tool connection point (314-321) on the agricultural vehicle (300) to which the tool is connected; and ii) the offset distance for the tool type;
receive a trigger signal, which is representative of the agricultural vehicle (300) being at the known location with respect to the row of crop; and
for each agricultural tool, send a tool activation signal to the agricultural tool upon expiry of the associated activation time after the trigger signal is received.

2. The agricultural vehicle (300) of claim 1, wherein the controller (323) is configured to:
automatically detect a tool type for each agricultural tool that is connected to each of the plurality of tool connection points (314-321); and
look up the offset distance for each agricultural tool based on the associated detected tool type.

3. The agricultural vehicle (300) of claim 2, wherein the controller (323) is configured to receive a tool-type-identifier from each tool that is connected to one of the plurality of tool connection points (314-321) in order to automatically detect the tool type.

4. The agricultural vehicle (300) of any preceding claim, wherein:
the plurality of tool connection points (314-321) comprises three or more tool connection points; and
at least three agricultural tools are connected to the three or more tool connection points.

5. The agricultural vehicle (300) of any preceding claim, wherein the tool activation signal is for:
putting the agricultural tool into an operational position;
taking the agricultural tool out of an operational position changing the orientation of the agricultural tool;
changing the location of the agricultural tool; and / or
changing a working speed of the associated agricultural tool.

6. The agricultural vehicle (300) of any preceding claim, wherein the controller (323) is configured to: determine the activation time for each tool also based on: iii) an activation period that represents the length of time that it takes for the tool type to transition to or from an operational position.

7. The agricultural vehicle (300) of any preceding claim, wherein the controller (323) is configured to determine the activation time for each agricultural tool based on a distance between: a) the location of the tool connection point (314-321) on the agricultural vehicle (300) to which the agricultural tool is connected; and b) a predetermined reference point (322) on the agricultural vehicle (300).

8. The agricultural vehicle (300) of any preceding claim, further comprising a sensor that is configured to provide a sensed signal to the controller, wherein the sensed signal is indicative of the agricultural vehicle being at the known location with respect to the row of crop; and wherein the controller is configured to automatically generate the trigger signal based on the sensed signal.

9. The agricultural vehicle (300) of any preceding claim, wherein the trigger signal is either:
representative of the agricultural vehicle being at a known location with respect to the start of a row of crop; or
representative of the agricultural vehicle being at a known location with respect to the end of a row of crop.

10. The agricultural vehicle (300) of any preceding claim, wherein the controller (323) is further configured to:
in response to receiving the trigger signal, automatically set an operating parameter of the agricultural vehicle (300) according to a predetermined routine.

11. The agricultural vehicle (300) of any preceding claim, wherein the controller (323) is configured to:
receive a sequence of trigger signals, which are each representative of the agricultural vehicle (300) being at different known locations with respect to the row of crop; and
for each of the sequence of trigger signals:
look up an offset distance for each agricultural tool based on the associated tool type, wherein the offset distance represents an offset from the agricultural vehicle being at the associated known location with respect to the row of crop at which the tool should be activated;
determine an activation time for each agricultural tool based on: i) a location of the tool connection point on the agricultural vehicle to which the tool is connected; and ii) the offset distance for the tool type; and
for each agricultural tool, send a tool activation signal to the agricultural tool upon expiry of the associated activation time after the associated trigger signal is received.

12. The agricultural vehicle (300) of any preceding claim, wherein the agricultural tools are operable independently of each other.

13. The agricultural vehicle (300) of any preceding claim, wherein the agricultural vehicle is a straddle tractor, such as a harvesting vehicle, such as a grape harvester.

14. A computer-implemented method of operating an agricultural vehicle (300), wherein the agricultural vehicle (300) comprises a plurality of tool connection points (314-321), wherein each tool connection point (314-321) is for receiving an agricultural tool, the method comprising:
looking up an offset distance for each agricultural tool that is connected to a tool connection point based on an associated tool type (661), wherein the offset distance represents an offset from the agricultural vehicle being at a known location with respect to a row of crop, along a longitudinal dimension of the row of crop, at which the tool should be activated;
determining an activation time for each agricultural tool based on: i) a location of the tool connection point on the agricultural vehicle to which the tool is connected; and ii) the offset distance for the tool type (662);
receiving a trigger signal (663), which is representative of the agricultural vehicle being at the known location with respect to the row of crop; and
for each agricultural tool, sending a tool activation signal to the agricultural tool upon expiry of the associated activation time after the trigger signal is received (664).

15. A computer program configured to perform the method of claim 14.
